**Europäisches Patentamt**

**European Patent Office**

**Office européen des brevets**

(19)

(11) Veröffentlichungsnummer : **0 231 723**
**B1**

(12) **EUROPÄISCHE PATENTSCHRIFT**

(45) Veröffentlichungstag der Patentschrift :
19.07.89

(51) Int. Cl.⁴ : **B 05 B 15/12**

(21) Anmeldenummer : 86730175.6

(22) Anmeldetag : 23.10.86

(54) **Vorrichtung zum Besprühen von Teilen.**

(30) Priorität : 22.01.86 DE 3602172

(43) Veröffentlichungstag der Anmeldung :
12.08.87 Patentblatt 87/33

(45) Bekanntmachung des Hinweises auf die Patenterteilung : 19.07.89 Patentblatt 89/29

(84) Benannte Vertragsstaaten :
AT FR GB IT

(56) Entgegenhaltungen :
AT–B– 359 616
DE–A– 3 003 158
DE–B– 2 926 040
DE–C– 3 116 368

(73) Patentinhaber : **MANNESMANN Aktiengesellschaft**
**Mannesmannufer 2**
**D-4000 Düsseldorf 1 (DE)**

(72) Erfinder : **Meyer, Walter, Dr.rer.nat.**
**Schillerstrasse 31**
**D-4100 Duisburg 46 (DE)**
Erfinder : **Hillemanns, Herbert, Dipl.-Ing.**
**Brentanostrasse 6**
**D-4030 Ratingen 2 (DE)**
Erfinder : **Samans, Robert, Dipl.-Ing.**
**Mühlenbroicher Weg 165**
**D-4000 Düsseldorf (DE)**
Erfinder : **Majetschak, Karl-Heinz, Dipl.-Ing.**
**Schlippertstrasse 2**
**D-4030 Ratingen (DE)**

(74) Vertreter : **Meissner, Peter E., Dipl.-Ing. et al**
**Meissner & Meissner Patentanwälte Herbertstrasse**
**22**
**D-1000 Berlin 33 Grunewald (DE)**

EP 0 231 723 B1

## Beschreibung

Die Erfindung betrifft eine Vorrichtung gemäß dem Gattungsbegriff des Hauptanspruchs.

Bekannt ist aus der DE-PS 31 16 368 eine Vorrichtung zur Durchführung eines Verfahrens zur Rückgewinnung des Sprühmittels beim kontinuierlichen Besprühen von langgestrecktem Walzgut, von der die gegenwärtige Erfindung ausgeht. Diese Vorrichtung ist aber nicht geeignet zum Besprühen von Teilen, die verhältnismässig kurz zum Durchmesser oder zur Breitenabmessung sind. Derartige Teile sind zum Beispiel Druckgasflaschen, KFZ- oder LKW-Felgen und Naben und kastenartige Behälter.

Derartige Teile werden üblicherweise an Hakenbahnen als Fördermittel durch die Fertigung und durch Lackierkabinen geführt und im elektrostatischen Feld mit Lacken besprüht. Für die Verwendung von wasserlöslichen oder wasserverdünnbaren Beschichtungsmitteln sind derartige Vorrichtungen nicht geeignet, da diese Beschichtungsmittel nicht elektrostatisch beeinflußbar sind.

Aufgabe der Erfindung ist eine Vorrichtung, in der das Besprühen von Teilen mit wasserlöslichem oder wasserverdünnbarem Beschichtungsmittel unter Rückgewinnung des Überschüssigen Beschichtungsmittels und damit eine wirtschaftliche Behandlung möglich ist.

Die Vorrichtung ist so eingerichtet, daß sie in der Hakenbahn als Fördermittel eingebracht werden kann. Sie ist aber davon nicht abhängig, wie auch die Hakenbahn selbst nicht Bestandteil des Schutzanspruchs ist. Die Vorrichtung hat den Vorteil, daß die Spritzkammer während des Besprühens fest verschlossen ist, so daß wenig Beschichtungsmittel verlorengeht und das Umfeld wenig beeinträchtigt ist. Außerdem werden die notwendigen Offnungsbewegungen der Spritzkammer zum Wechseln der Teile auch zum Sammeln des sich an der Innenwand der Spritzkammer ablagernden Beschichtungsmittel benutzt.

Eine besonders vorteilhafte Ausbildung der Vorrichtung ist Gegenstand des Unteranspruchs.

Die Erfindung wird anhand eines schematisch dargestellten Ausführungsbeispiels erläutert.

Figur 1 zeigt einen senkrechten Schnitt durch die Vorrichtung in Richtung der Förderbahn.

Figur 2 zeigt einen Horizontalschnitt.

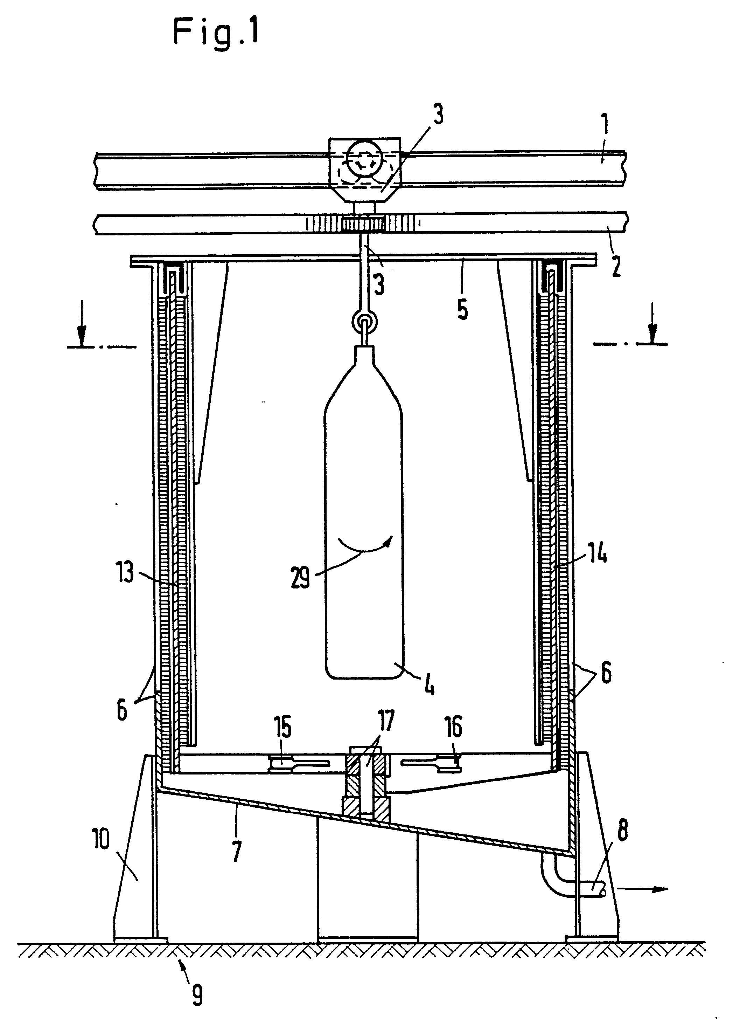

Die Figur 1 zeigt eine Vorrichtung zum Besprühen von Stahlflaschen 4 an einer Hakenbahn mit einer Trägerschiene 1 und einem Transportmittel 2. Am Aufnehmer 3 der Hakenbahn befindet sich die Stahlflasche 4. Der Aufnehmer 3 greift durch einen Schlitz im Deckel 5 der Spritzkammer, die außerdem von der Trommel 6 und dem Boden 7 gebildet ist. Im Boden 7 befindet sich außerdem ein Abfluß 8 für Überschüssiges Beschichtungsmittel. Die Spritzkammer ist auf dem Grund 9 feststehend in einem Gestell 10 angeordnet.

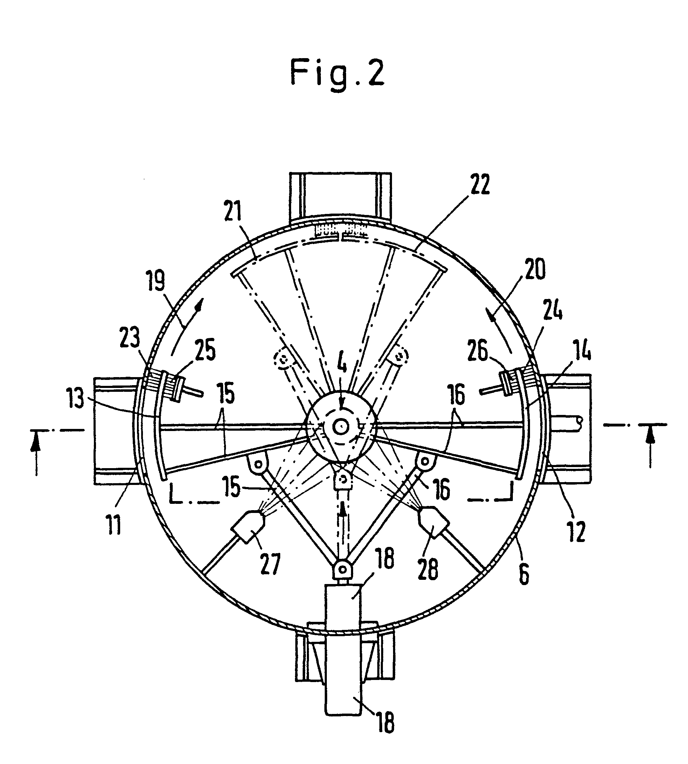

Der Deckel 5 besitzt einen in der Zeichnungsebene in Figur 1 liegenden Schlitz und die Trommel 6 damit fluchtende Schlitze 11,12, die in Figur 2 sichtbar sind. Die Schlitze sind abdeckbar von Schiebetüren 13,14, die von Gestängen 15,16 geführt um ein Lager 17 in der Trommelachse von der Kolbenzylinderkombination 18 in Richtung der Pfeile 19,20 geschwenkt werden. Damit gelangen die Schiebetüren 13,14 von der ausgezogen gezeichneten Position in die in Figur 2 strichpunktierte Position 21,22. Die Schiebetüren 13,14 sind auf der ganzen Höhe mit Bürsten 23,24 besetzt, die beim Schwenken über die Innenwand der Trommel wischen und damit das Abfließen des überschüssigen Beschichtungsmittels zum Boden 7 bewirken. Es können außerdem Bürsten 25,26 vorgesehen sein, die bei der Bewegung über die Innenseite der Türen 13,14 wischen. Die Bürsten 25,26 sind an der Trommel 6 befestigt, was in Figur 2 nicht dargestellt ist.

Schließlich sind Spritzdüsen innerhalb der Spritzkammer entsprechend der Form der zu besprühenden Teile vorgesehen. Hier sind zwei Spritzdüsen 27, 28 eingezeichnet. Das Teil 4 dreht sich während des Besprühens entsprechend dem Pfeil 29 um seine Längsachse.

Die Anlage arbeitet taktweise während des Besprühens des Teiles 4, wie in den Figuren dargestellt, und die Türen 13, 14 sind geschlossen. Das dabei nicht auf das Teil 4 treffende Beschichtungsmittel schlägt sich an den Trommelwänden 6 und den Schiebetüren 13, 14 nieder. Zum Wechsel des Teiles 4 wird das Besprühen unterbrochen und die Türen 13, 14 schwenken in die Position 21, 22. Dabei wischen sie die Trommelwände und sich selbst ab. Das überschüssige Beschichtungsmittel sammelt sich am Boden 7 und wird durch 8 der Wiederverwendung zugeführt. Außerdem ist der Weg frei, mit der Hakenbahn 1, 2 das Teil 4 aus der Kammer herauszufahren und dabei ein anderes Teil hineinzubewegen. Darauf hin schließen die Türen und ein neuer Beschichtungsvorgang beginnt.

## Patentansprüche

1. Vorrichtung zum Besprühen von Teilen mit einem wasserlöslichen oder wasserverdünnbaren Beschichtungsmittel, das aus einem Bindemittel, Pigment sowie einem Lösungs- bzw. Verteilungsmittel besteht, wobei der Überschuß am Beschichtungsmittel gesammelt und wiederverwendet wird, in Form einer Spritzkammer mit Ein-, Austritt und Fördermittel für die zu besprühenden Teile, mit ein oder mehreren Spritzdüsen und Abstreifern an den Kammerinnenwänden, dadurch gekennzeichnet, daß der Boden (7) der feststehenden Spritzkammer zur Horizontalen zu einem Abfluß (8) hin geneigt ausgebildet ist, Ein- und Austritt (11, 12) von Schiebetüren gebildet sind, die vor der Kammerinnenwand gleiten und mindestens einige der insgesamt vorhandenen Abstreifer (23, 24) tragen und außerdem feststehende Abstreifer (25, 26) vorgesehen sind, an denen sich die Innenseiten der Türen (13, 14) abstreifen.

2. Vorrichtung nach Anspruch 1, dadurch gekennzeichnet, daß weitere Abstreifer vom Schiebeantrieb (15, 16, 18) der Türen (13, 14) angetrieben sind.

**Claims**

1. A device for spraying articles with a coating agent which is water-soluble or can be diluted with water and comprises a binding agent, a pigment and a solvent or dispersing agent, the excess of coating agent being collected and reused, the device being in the form of a spray chamber with an inlet, an outlet and supply means for the articles which are to be sprayed, with one or more spray nozzles and scrapers on the inner walls of the chamber, characterised in that the base (7) of the stationary spray chamber is inclined to the horizontal towards a discharge pipe (8), the inlet and outlet (11, 12) comprise sliding doors which slide in front of the inner wall of the chamber and have at least some of the total of scrapers (23, 24) present, and stationary scrapers (25, 26) are provided which engage the insides of the doors (13, 14).

2. A device according to Claim 1 characterised in that additional scrapers are driven by the slider drive (15, 16, 18) of the doors (13, 14).

**Revendications**

1. Dispositif pour asperger des articles à l'aide d'un milieu de revêtement soluble dans l'eau ou diluable dans l'eau, qui est constitué d'un adhésif, d'un pigment ainsi que d'un solvant ou d'un agent égalisateur, l'excès de milieu de revêtement étant collecté et de nouveau utilisé, sous forme d'une chambre d'aspersion comportant une entrée et une sortie et des moyens de transport pour les parties à asperger, une ou plusieurs buses d'aspersion et des moyens de raclage étant prévus sur les parois internes de la chambre, caractérisé en ce que le fond (7) de la chambre d'aspersion stationnaire est réalisé de façon inclinée par rapport à l'horizontale vers une conduite (8), l'entrée et la sortie (11, 12) sont formées par des portes coulissantes, qui coulissent devant la paroi interne de la chambre et portent au moins certains de tous les moyens de raclage existants (23, 24) et des moyens de raclage stationnaires (25, 26) étant de plus prévus, sur lesquels raclent les côtés internes des portes (13, 14).

2. Dispositif selon la revendication 1, caractérisé en ce que d'autres moyens de raclage sont entraînés par l'entraînement coulissant (15,16,18) des portes (13, 14).

# Fig.1

# Fig.2